# EUROPEAN PATENT APPLICATION

(11) **EP 3 865 913 A1**
(43) Date of publication of application: **18.08.2021**
(21) Application number: 20157354.0
(22) Date of filing: 14.02.2020
(51) Int. Cl.: G01S 19/25

(54) **ULTRALOW POWER GNSS RECEIVER**

(71) Applicant: Semtech Corporation, Camarillo, CA 93012 (US)
(72) Inventor: Constant, Guillaume, 38610 Venon (FR); Ning, Baozhu, 38000 Grenoble (FR); Sornin, Nicolas, 38700 La Tronche (FR)
(74) Representative: P&TS SA (AG, Ltd.)

(57) **Abstract**

A system for updating almanac data in low-power GNSS mobile devices (30-34), including a server (20) that keeps a local copy of the almanacs stored in each of the devices and evaluates repeatedly the quality of the almanac of each of the mobile devices (30-34). The evaluation comprises predicting the Doppler shifts for all the satellites potentially receivable by the mobile device using the orbital parameters in the copy and comparing the result with an accurate determination of the same Doppler shifts based on real orbital data.

## Description

### Field of the invention

The present invention concerns, in embodiment a geolocalization device with an ultralow power satellite receiver, for example a receiver for GPS, Galileo, BeiDou, or Glonass geolocalization satellites.

### Description of related art

Global Navigation Satellite System, commonly shortened as GNSS, indicate a large class of geolocalization and navigation systems in which a mobile device can determine its position (and additionally the precise time) based on radio signals from several orbiting satellites and use the information contained in these signals to determine the distances, or ranges, from the receiver to each of the received satellites. The orbits of the satellites being known, the location of the receiver can then be determined geometrically.

The Global Positioning System (GPS in short) is the oldest and best known Global Navigation Satellite System but other constellations of satellites, BeiDou, GLONASS, Galileo, have been recently deployed or are expected to be deployed in the near future, improving the performance and availability of satellite geolocalization. The present invention is applicable to all GNSS systems.

Geolocalization is pervasively used in a host of devices and application including vehicles, portable phones, asset tracking, security, and many other. In many use cases - the so-called "Internet of Things" applications (IoT) and Low Power Wide-Area Networks (LPWANs) - there is a need to integrate a GNSS receiver in small devices that are expected to operate autonomously for a long time on limited energy resources, such as a battery or a small photovoltaic converter, for example. There is therefore a need for GNSS receivers that can determine their position with the least possible expenditure of energy.

GNSS radio signals are in the portion of the radio spectrum above 1 GHz and are generally direct-sequence spread-spectrum signals. Although different systems use different formats and nomenclatures, GNSS radio signals carry, in general, a ranging code and a navigation code. Ranging codes are pseudorandom code binary sequences, which are used in the receiver to determine the range to all the received satellites. Following the GPS nomenclature, the C/A code in the L1 band is the ranging code that most of the commercial receiver use. This disclosure will refer to specific elements of the GPS system for concision, being it understood that equivalent elements exist in the GPS and in other GNSS system and the invention is applicable to these as well.

The signal strength of the GPS signals on earth surface is, nominally, -130 dBmW, a value which is further attenuated whenever the view of the sky is obstructed, and especially within buildings. Other satellite navigation systems provide signals of comparable strength. Such levels are well below the noise floor; thus, the signal can be received only by use of statistical techniques.

In order to acquire these codes and perform a position fix a GNSS receiver generates, for each received satellite, a local replica of a ranging code transmitted by the satellite, adjusted to a local oscillator. The code is then time-shifted, correlated with the received signal in a correlation engine of the receiver, and integrated, for a time that can be more or less long according to the noise level, until a peak of correlation value is obtained for a certain value of time-shift, that depends from the distance between the receiver and the satellite. Different satellites - also called "space vehicles", or SV in short - can be discriminated by the different C/A codes that they broadcast.

In addition to the ranging code, the satellites broadcast also a navigation message (for example the GPS NAVDATA message) that contain important information like: system time, corrections for the satellite's clock, ionospheric delay parameters, an health indicator of the satellite, and orbital data for computing the exact position of an SV at each given instant, which is essential to the determination of a position. Orbital data may be organized in two files, or group of data. The "almanac" gives orbital parameters for all the SV and has a validity of several weeks. Precise positioning of the space vehicles requires another file, the "ephemerides" that contains short-term corrections to the almanac orbit. These data, and particularly the almanac, are also available form other sources, for example on the internet.

The amount of time-shift needed to achieve optimal correlation is denoted as pseudo-range and is a function of the distance between the satellite and the GPS receiver and the time at which the signal capture was initiated. The internal clock of the GPS is usually affected by a large error with respect to the GPS satellite clocks. In order to resolve this error a GPS receiver must acquire at least four satellites to provide a position fix comprising the three space coordinates *x,y, z* and time *t.*

A known way of economizing energy in loT geolocalization devices is to delegate as much of the computing as possible to cloud-based servers. Assisted-GNSS receivers are not equipped to compute their position, but just acquire the signals from a plurality of satellites and transmit the demodulated signal to a server that knows the position of the satellites, computes the position of the receiver and transmits it to the designated users that may be the original receiver node.

The carrier frequencies of GNSS signals are Doppler-shifted due to the relative speed between the receiving node and the SV. The acquisition of these signals is an inherently time- and energy-consuming process which involves searching for a correlation peak in a three-dimensional parameter space, whose axes correspond to the satellite identity; frequency, and temporal shift of the pseudo-random code. For each search, aimed at a specific satellite, all possible code phases plus all possible frequencies may have to be tried in the correlation circuit until a peak is found. The search process is particularly long and energy-intensive when no prior knowledge is available.

Taking the GPS system as an example, the C/A code sequence is broadcast at 1.023 million of chips per second and comprises 1023 chips, repeating itself every millisecond. The correlator in the receiver must therefore test 1023 possible phases of the C/A code for each satellite. The carrier frequency of 1.575 GHz is received with a Doppler shift of ± 4.2 kHz from the orbital motion of the satellite, plus an unknown shift due to the device's own ground speed and the imprecision of the device's internal frequency reference (often a TCXO) that contributes approximately ± 4.7 kHz to the frequency uncertainty. Summing up, the acquisition search space for GPS spans:
- 32 possible C/A codes corresponding to the 32 SVs in the GPS constellation;
- 1023 possible C/A code shifts;
- ± 9 kHz of frequency offset in 100 Hz steps (the maximum admissible frequency mismatch for the correlator to trigger);

An exhaustive search in the whole acquisition search space requires considerable computing power for a long time and is hardly compatible with the energy resources of loT devices. An aim of the present invention is the provision of a GNSS receiver that can acquire its position with less expenditure of energy.

### Brief summary of the invention

According to the invention, these aims are achieved by means of the object of the independent claim. In particular, by a system comprising an almanac update server and a plurality of GNSS-capable devices in a low-power wide-area network, wherein the GNSS capable nodes can determine their position based on signals from a plurality of geolocalization space vehicles, and the almanac update server has access to the real positions and speeds of the space vehicles, wherein the devices store orbital data of space vehicles for the purpose of predicting Doppler shifts of said space vehicles, and the almanac update server is arranged to maintain a copy of the orbital data stored in the devices, and to compute, for each device and space vehicle: a predicted Doppler shift based on the orbital data stored in the digital copy of the device; an actual Doppler shift based on position and speed of the space vehicle derived from another source of orbital data; and wherein the almanac update server evaluates the quality of the almanacs of each of the mobile devices, using the copies and, based on the evaluated quality of the almanac, decides whether to transmit updated almanac data to the mobile devices.

Dependent claims deal with important and advantageous but not essential features of the invention such as an evaluation of the quality of the almanacs with the computation of a difference between the predicted Doppler shift with the actual Doppler shift of the selected space vehicle received by the selected device, the comparison of the difference against a determined threshold and, when the difference between the predicted Doppler and the actual Doppler of one selected space vehicle received by a selected device exceeds a determined threshold, transmission of updated orbital data relative to the space vehicle to the selected device.

Other advantageous features include the selection of a proper subset of updated orbital parameters of the selected space vehicle to transmit the to the selected device, the presence of an A-GNSS server receiving intermediate localization results from the GNSS-capable devices and computing their position based thereupon, wherein the intermediate localization results include identification codes of acquired space vehicles and delays of the respective ranging codes or pseudo-ranges to the acquired space vehicles; and he duplication or multiplication of the update servers and/or of the A-GNSS server in the LPWAN.

The invention makes use of almanac data. Provided the device has a rough estimate of its position (within 100 km) and of the current time (±1 min), the almanac can be used to compute the list of visible satellites and predict the Doppler shift deriving from the satellite motion. This traduces in a considerable reduction of the acquisition search space. An even larger saving can be obtained if the device has a way of estimating the frequency error of its own time reference against an external reliable source, as is the case of a LoRa device synchronizing its internal clock with that of a network access point.

A limitation of this approach is that the accuracy of the Doppler prediction is not absolute. Even if the almanac is perfectly accurate at a given instant, the orbits of the satellites are influenced by several factors that are not included in the in the orbital model used to compile the almanac, including: solar wind, sun and moon attraction, uneven mass distribution in the earth, orbital maneuvers, and so on. As the almanac ages, so the estimated Doppler shifts drift from the actual value until, after a time that may be of weeks, the error exceeds the maximum tolerable value of ±150 Hz, and an updated almanac must be obtained.

As mentioned in the previous section, almanac data are broadcast from the SV, and are meant to be demodulated and stored at the receiving node. Nevertheless, the navigation message is transmitted at very low bandwidth and lasts about 12 minutes for the GPS only, plus comparable times for the other constellations. Holding a GNSS receiver active for such a long time would represent an intolerable expense of energy for an loT device.

Almanac data can be downloaded from the network. Still, almanac data for GPS and BeiDou constellation typically sum up to about 2 kBytes. In LPWAN networks that are typically very constrained in downlink capacity, this still represents a significant expense.

The present invention proposes a method and a system to minimize the downlink data sent to GPS devices in LPWAN networks while maintaining an adequate accuracy of Doppler prediction. The system operates by maintaining a "digital twin" of the device in a server. The server keeps an accurate copy of the device's almanac state and updates the almanac stored in the twin every time the almanac in the device is updated.

Therefore, under the very reasonable assumption that the position of the GPS device is known with less than 100 km incertitude, the server can compute the same Doppler prediction as the device. Unlike the GPS device, however, the server has access to the real physical position and speed of all the satellites in real time and can determine the difference between the Doppler prediction and the real Doppler that would apply to the GPS device at any time.

For each managed GPS device, the server performs repeatedly (typically a few times per day) the following job:
1. predict the Doppler shift of all satellites based on the orbital data (the almanac) stored in the digital twin of the GPS device
2. compute the real Doppler shift of the signal of all the satellites received by the GPS device based on real positions and speeds of the satellites.
3. If the difference between the predicted Doppler shift and the real Doppler shift of a satellite exceed a determined threshold, mark the satellite as requiring an update for the GPS device.
4. once the server has looped through all the satellites of the supported constellations, it assembles a list of satellites requiring an update (this list may be empty most of the times)
5. prepare a downlink message containing updated almanac parameters of the satellites requiring an update and transmit the downlink message to the GPS device at the earliest opportunity

The system and method of the invention guarantee that the almanac parameters of a given satellite for a given device are updated only when and insofar as necessary, meaning that the Doppler shift predicted by the device is not allowed to become too high and prevent or delay signal acquisition, while minimizing the amount of downlink data.

### Brief Description of the Drawings

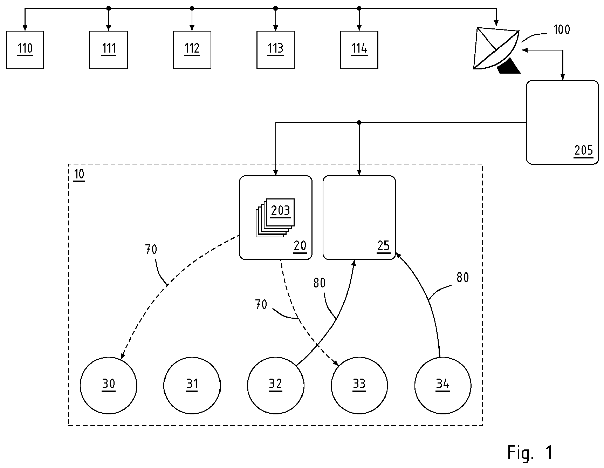

The invention will be better understood with the aid of the description of an embodiment given by way of example and illustrated by the figure that shows a diagram of the system of the invention

### Detailed Description of possible embodiments of the Invention

With reference to the figure, the system of the invention is inside a LPWAN 10 that could be a LoRa network and, in that LPWAN, at least one almanac update server **20** and a plurality of GNSS-capable devices **30-34,** and preferably one or more A-GNSS servers **25.**

The number of GNSS devices in a LPWAN network like LoRaWAN can be more than several thousand. When several devices are present, it may be advantageous to deploy a plurality of almanac update servers **20,** and A-GNSS servers **25,** each of them taking care of a subset of the GNSS devices.

The almanac update server **20** and the a-GNSS server **25** are drawn as separate blocks to underline their separate function but they could be realized by software modules running in a common server and share any number of software and hardware resources. The almanac update server **20** and the a-GNSS server **25** may be embedded in LPWAN access points, with a LPWAN physical interface, or be realized by separate computers, communicating with the other nodes in the network **10** through a not represented proxy, or in any other suitable way.

Each of the devices **30-34** has a GNSS radio receiver that can receive and demodulate the radio signals broadcast by a plurality of space vehicles. The figure represents five satellites **110-114** controlled by a ground control station **100** and an internet server **205** that publishes the orbital position of all the satellites in real time. The satellites **110-114,** the ground control station **100,** and the internet server **205** are not part of the system of the invention but interoperate with it. Although the drawing shows five satellites managed by a single ground centre and a single internet server to avoid clutter, real numbers are much higher and the infrastructures managing the GPS, BeiDou, Glonass, and Galileo constellations is highly complex, comprising several control centres and control stations.

As mentioned in the introduction, devices **30-34** operate with the assistance of the A-GNSS server **25.** The devices (**32** and **33** in the figure) for which a position fix is required acquire the signals broadcast of a number sufficient (at least 4, put preferably more) of satellites and upload an intermediate localization result to the A-GNSS server **25** (arrow **80**). The intermediate result may include the identification code of the acquired satellites, and the delays of the respective ranging codes (pseudo-ranges).

The A-GNSS server computes the position of the devices that have requested a fix from the uploaded intermediate results. The positions may be retransmitted to the original device, if necessary, or used in any other way. The server **25** makes use of the real and accurate position of the satellites that are available from server **205.**

As mentioned in the introduction, the mobile devices **20-34** need not know the orbital parameters of the satellites to compute their position, because this task is delegated to the server **25,** but a certain knowledge of the orbital parameters is essential to reduce the acquisition time, either because the receiver will search only the satellites that are expected to be visible above the horizon at any given moment, and because the span of frequencies searched can be reduced by a prediction of the Doppler shift. Server **20** is responsible for ensuring that the mobile devices **30-34** always have sufficient information on the satellite's positions and speed.

Server **20** provides almanac data to the mobile devices **30-34,** requesting it, for example, from the internet server **205,** or from any reliable source. At the same time, the server keeps, for each of the devices that it manages, a copy of the almanac in its internal memory **203.** All the updates to the almanac in the mobile nodes **30-34** are reflected in corresponding changes of the copies such that the two are always identical.

The server **20** evaluates repeatedly the quality of the almanac of each of the mobile devices **30-34,** using its local copies. The evaluation comprises predicting the Doppler shifts for all the satellites potentially receivable by the mobile device using the orbital parameters in the copy **302** and comparing the result with an accurate determination of the same Doppler shifts based on real orbital data, for example obtained by the server **205.**

Thanks to this comparison, the server **20** can determine at any moment and for each device, if the orbital data already known to the device are good enough to acquire quickly all the possible satellites or, on the contrary if some satellites would be impossible or too difficult to acquire because the difference between the predicted Doppler shift and the real Doppler shift has exceeded a given threshold. In the latter case, the server schedules a partial almanac update, that will be downloaded to the interested device at the first available opportunity (arrows **70**).

Importantly, the partial update interests only a fraction of the almanac data. On top of that, satellite updates are limited, most of the times, to a few parameters of the orbital model of that satellite. Based on the digital twin state the server decides which minimal set of parameters of that SV must be updated to achieve correct Doppler prediction.

### Reference symbols in the drawing

- **10**: LPWAN network
- **20**: almanac update server
- **25**: A-GNSS server
- **30-34**: GNSS-capable devices
- **70**: download of an almanac update
- **80**: upload of intermediate result
- **100**: ground control station
- **110-114**: satellites or Space Vehicles
- **203**: twin copies of almanacs
- **205**: internet server

## Claims

1. System comprising an almanac update server and a plurality of GNSS-capable devices in a low-power wide-area network, wherein the GNSS capable nodes can determine their position based on signals from a plurality of geolocalization space vehicles, and the almanac update server has access to the real positions and speeds of the space vehicles, wherein the devices store orbital data of space vehicles for the purpose of predicting Doppler shifts of said space vehicles, and the almanac update server is arranged to maintain a copy of the orbital data stored in the devices, and to compute, for each device and space vehicle:
• a predicted Doppler shift based on the orbital data stored in the digital copy of the device
• an actual Doppler shift based on position and speed of the space vehicle derived from another source of orbital data.
and, wherein the almanac update server evaluates the quality of the almanacs of each of the mobile devices using the copies and, based on the evaluated quality of the almanac, decides whether to transmit updated almanac data to the mobile devices.

2. The system of the preceding claim, the evaluation of the quality of the almanacs comprises the computation of a predicted Doppler shift of a selected space vehicle received by a selected device based on the copy of its almanac in the almanac update server, the difference between the predicted Doppler shift with the actual Doppler shift of the selected space vehicle received by the selected device, the comparison of the difference against a determined threshold.

3. The system of the preceding claim, wherein the almanac update server is arranged to select a subset of updated orbital parameters of the selected space vehicle that bring the difference below the threshold, and to transmit the subset to the selected device.

4. The system of any one of the preceding claims, comprising an A-GNSS server arranged to receive intermediate localization results from the GNSS-capable devices and to compute a position of the GNSS-capable devices based on the intermediate localization results.

5. The system of the preceding claim, wherein the intermediate localization results include identification codes of acquired space vehicles and delays of the respective ranging codes or pseudo-ranges to the acquired space vehicles.

6. The system of any one of the preceding claims, comprising a plurality of almanac update servers and/or a plurality of A-GNSS servers in one low-power wide-area network.

7. The system of any one of the preceding claims, wherein the updated orbital data consist in a proper subset of orbital parameters of the space vehicle.

8. The system of any one of the preceding claims, wherein the low-power wide-area network is a LoRaWAN network.
